(19) Europäisches Patentamt
European Patent Office
Office européen des brevets

(11) **EP 2 209 675 B1**

(12) **EUROPÄISCHE PATENTSCHRIFT**

(45) Veröffentlichungstag und Bekanntmachung des Hinweises auf die Patenterteilung:
**07.12.2011 Patentblatt 2011/49**

(21) Anmeldenummer: **08803530.8**

(22) Anmeldetag: **02.09.2008**

(51) Int Cl.:
**B60S 1/08** *(2006.01)*

(86) Internationale Anmeldenummer:
**PCT/EP2008/061559**

(87) Internationale Veröffentlichungsnummer:
**WO 2009/049959 (23.04.2009 Gazette 2009/17)**

(54) **VERFAHREN ZUM BETREIBEN EINES REGENSENSORS INSBESONDERE FÜR KRAFTFAHRZEUGE**

METHOD FOR OPERATING A RAIN SENSOR, PARTICULARLY FOR MOTOR VEHICLES

PROCEDE POUR FAIRE FONCTIONNER UN DETECTEUR DE PLUIE, EN PARTICULIER POUR DES VEHICULES AUTOMOBILES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.10.2007 DE 102007048858**

(43) Veröffentlichungstag der Anmeldung:
**28.07.2010 Patentblatt 2010/30**

(73) Patentinhaber: **Robert Bosch GmbH**
**70442 Stuttgart (DE)**

(72) Erfinder: **BOCHAT, Ralf**
**77830 Buehlertal (DE)**

(56) Entgegenhaltungen:
**EP-A- 0 520 302     DE-A1- 10 214 421**
**US-A- 6 108 084**

**Beschreibung**

Die Erfindung betrifft ein Verfahren zum Betreiben eines Regensensors insbesondere für Kraftfahrzeuge nach dem Oberbegriff von Anspruch 1. Weiterhin betrifft die Erfindung einen Regensensor mit den Merkmalen gemäß dem Oberbegriff von Anspruch 12.

In vielen Kraftfahrzeugen werden heutzutage Regensensoren eingesetzt, die eine automatische Steuerung des Scheibenwischers am Kraftfahrzeug ermöglichen. Zu diesem Zweck werden zumeist optische Regensensoren eingesetzt, die im Fahrzeuginnenraum über ein Koppelmedium wie beispielsweise Silikon an die Windschutzscheibe angekoppelt werden. Ein derartiger Regensensor weist dabei eine Sendeeinheit und einen Detektor auf. Die Sendeeinheit leitet einen Lichtstrahl, zumeist über ein Linsensystem in die Scheibe. An der Scheibenoberfläche wird das Licht total reflektiert. Von dort aus wird das Licht über eine weitere Linse oder ein weiteres Linsensystem auf den Detektor geleitet. Je mehr Wasser sich nun auf der Scheibenoberfläche befindet, desto geringer ist die Reflexion und damit auch das vom Detektor gemessene Signal. Damit lässt sich die Menge des auf der Scheibe befindlichen Wassers detektieren und die Wischeranlage in Abhängigkeit der detektierten Regenmenge automatisch auf eine günstige Stufe der Wischgeschwindigkeit steuern.

Üblicherweise weist die Sendeeinheit einige oder mehrere LEDs auf, die mit unterschiedlichen Stromstärken angesteuert werden können, um unterschiedliche Helligkeiten zu erzeugen. Der Detektor ist üblicherweise in seiner Empfindlichkeit variierbar, so dass er geeignet, insbesondere auf unterschiedliche Scheibentransmissionen einstellbar ist. Als Licht, das von der Sendeeinheit ausgeht, wird insbesondere Infrarotlicht eingesetzt. Entsprechend wird der Detektor so ausgestaltet, dass er für Infrarotlicht sensitiv ist. Dabei kann das von der Sendeeinheit ausgehende Licht unter Verwendung eines erhöhten LED-Stroms auch gepulst betrieben werden. Ein derartiger Regensensor ist beispielsweise aus der DE 42 17 390 C2 bekannt.

Die US 6,108,084 beschreibt einen kombinierten Sensor zur gleichzeitigen Ermittlung einer Sichtweite und eines Regenbelags. Dazu wird Licht in eine Scheibe so eingekoppelt, dass ein Teil in der Scheibe reflektiert wird und ein Teil die Scheibe verlässt und außerhalb der Scheibe gestreut wird. Aus dem reflektierten Teil wird der Regenbelag ermittelt und aus dem gestreuten Teil, der zur Scheibe zurückgelangt, die Entfernung bestimmt. Beide Teile werden mittels eines gemeinsamen Lichtempfängers erfasst.

Bei Regensensoren, die auf einer derartig gepulsten Lichtmessung basieren, werden üblicherweise in Abhängigkeit von der Scheibentransmissionen die Sendelichtstärke beziehungsweise die Detektorempfindlichkeit variiert, bis ein günstiger Arbeitspunkt eingestellt ist. Eine Ansteuerung der Scheibenwischervorrichtung erfolgt nur dann, wenn das Regensignal eine bestimmte Schwelle über- oder unterschreitet. Eine Schwierigkeit besteht bei dieser Vorgehensweise darin, dass der Detektor Licht erfasst, das zum einen Nutzlicht von der Sendeeinheit und zum anderen auch unerwünschte Anteile des jeweiligen Umgebungslichts, das so genanntes Fremdlicht enthält. Üblicherweise wird daher beim Detektor der von der Sendeeinheit ausgehende Nutzlichtanteil vom Fremdlichtanteil durch eine geeignet ausgeführte Filtereinrichtung getrennt. Um eine gute Abtrennung des Fremdlichts erreichen zu können, wird die Nutzlichtmessung mit einer bestimmten Verzögerung nach dem Einschalten des Sendelichts durchgeführt. Die Dauer der Verzögerung wird dabei unter Berücksichtigung der Filterabstimmung und der Ansprechzeit der eingesetzten Operationsverstärker ermittelt.

Erfindungsgemäß wird nun ein Verfahren zum Betreiben eines Regensensors insbesondere für Kraftfahrzeuge vorgeschlagen, bei dem ein charakteristisches Merkmal des vom Detektor empfangenen Empfangssignals ausgenutzt wird, um die erforderliche Messverzögerung zu ermitteln. Dabei kann eine Messverzögerung ermittelt werden, die für den jeweils individuell verwendeten Regensensor optimiert ist. In einer bevorzugten Ausführungsform der Erfindung wird ein vom Detektor empfangenes Signal das als Funktion der Zeit vorliegt, dazu genutzt um die für den individuellen Regensensor günstige Messverzögerung zu ermitteln.

Signale, die als zeitabhängige Funktion vom Detektor erfasst werden und die einen Scheitelpunkt aufweisen sind dabei besonders geeignet. Denn bei solchen Signalen kann die Messverzögerung insbesondere dadurch festgelegt werden, dass die Zeit vom Einschalten des Sendelichts bis zu der Zeit ermittelt wird, zu der die Funktion ihren Scheitelpunkt aufweist. Beispielsweise kann hierzu das als Funktion der Zeit empfangene Nutzlichtsignal verwendet werden.

Sofern das Nutzlichtsignal verwendet wird um die erforderliche Messverzögerung zu ermitteln, kann dies beispielsweise dadurch erfolgen, dass eine reduzierte Standardmessverzögerung, beginnend mit einem Startwert schrittweise angehoben wird. Gleichzeitig kann der Wert des Nutzlichts überwacht werden. Das heißt, der Wert des Nutzlichts wird am Detektor korrespondierend zu der jeweiligen Messverzögerung ermittelt. Wird dabei ein lokales Maximum des Nutzlichtwertes ermittelt, so ist die für den individuell verwendeten Regensensor erforderliche beziehungsweise optimierte Messverzögerung ermittelt. Damit kann also mittels eines iterativen Verfahrens die für den jeweiligen Regensensor optimale Messverzögerung ermittelt und eingestellt werden.

In einer weiteren Ausführungsform der Erfindung kann auch die jeweils vorhandene Eingangsimpedanz des Detektors berücksichtigt werden, so dass die ermittelte Messverzögerung in Abhängigkeit von der Eingangsimpedanz modifiziert wird. Da die Eingangsimpedanz indirekt von deren Scheibentransmissionen abhängt, wird diese bei der Ermittlung der Messverzögerung damit ebenfalls berücksichtigt.

Besonders vorteilhaft an der Erfindung ist, dass die Messverzögerung automatisch durch den Regensensor selbst ermittelt werden kann. Zum einen kann dies bereits vor Auslieferung des mit dem Regensensor ausgestatteten Fahrzeugs erfolgen. Um allerdings auch Alterungseffekte berücksichtigen zu können ist es auch möglich, die jeweils aktuell erforderliche Messverzögerung beispielsweise im Rahmen eines Referenzwischzyklusses zu ermitteln. Hierzu kann die Messverzögerung im Laufe der Lebensdauer des Regensensors zu fest vorgegebenen Zeitabständen, zyklisch oder auf Aufforderung durch den Nutzer des Fahrzeugs wiederholt werden.

Weiterhin wird ein Regensensor insbesondere für Kraftfahrzeuge vorgeschlagen, der eine Sendeeinheit und einen Detektor aufweist. Weiterhin ist eine Einrichtung zur Trennung eines von der Sendeeinheit ausgehenden Nutzlichts von einem, nicht von der Sendeeinheit stammenden Fremdlicht vorgesehen. Zudem ist eine Steuereinrichtung vorgesehen, mit deren Hilfe ein charakteristisches Merkmal eines von dem Detektor empfangenen Empfangssignals dazu ausgenutzt werden kann, eine für den jeweiligen Regensensor erforderliche Messverzögerung festzulegen.

Der Regensensor kann auch eine Speichereinrichtung zum Speichern der so festgelegten Messverzögerung aufweisen.

Zur Trennung des Nutzlichts von dem Fremdlicht kann weiterhin vor dem Detektor eine Filtereinrichtung vorgesehen sein, die insbesondere auf bestimmte Grenzfrequenzen abgestimmt ist.

Weitere Vorteile und vorteilhafte Ausführungsformen der Erfindung sind Gegenstand der nachfolgenden Figuren sowie deren Beschreibungsteile. Es zeigen im Einzelnen:

Fig. 1: schematisch einen erfindungsgemäßen Regensensor

Fig. 2: schematisch die Ermittlung der Messverzögerung anhand eines vom Detektor erfassten Eingangssignals

Fig. 3: schematisch den Ablauf einer Initialisierung

Fig. 4: schematisch den Ablauf der Ermittlung der Messverzögerung

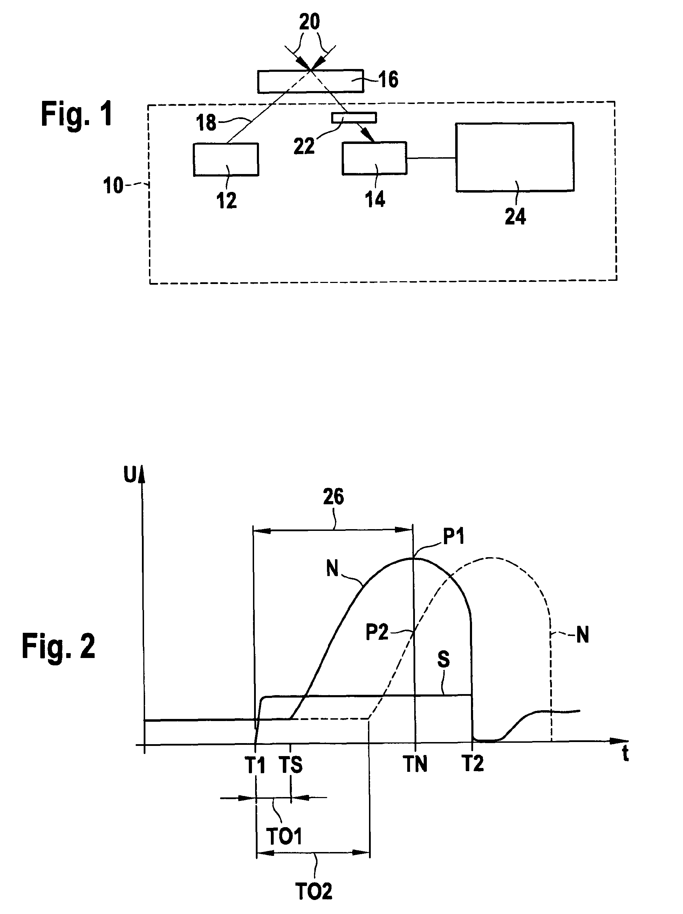

Fig. 1 zeigt schematisch den Aufbau eines erfindungsgemäßen Regensensors. Der Regensensor 10 weist er dabei eine Sendeeinheit 12 sowie einen Detektor 14 auf. Die Sendeeinheit 12 sendet dabei Nutzlicht 18, bevorzugt IR-Licht, in Richtung einer Scheibe 16, bevorzugt über ein nicht dargestelltes Linsensystem, aus. Das Nutzlicht 18 kann dabei als kontinuierlicher Strahl oder in Form von Lichtpulsen ausgesandt werden. Auf der Rückseite der Scheibe 20 wird das Nutzlicht 18 infolge von Totalreflexion reflektiert und trifft, gegebenenfalls über ein nicht dargestelltes Linsensystem, auf den Detektor 14. Die Lichtmenge an Nutzlicht 18, die auf den Detektor 14 gelangt, ist von der Benetzung der Scheibe 16 abhängig. Der Detektor kann dabei beispielsweise als Fotodiode ausgeführt sein. Neben dem Nutzlicht 18 fällt auf den Detektor 14 allerdings auch Fremdlicht 20, dass beispielsweise als Umgebungslicht durch die Scheibe 16 auf den Detektor 14 gelangt. In der Regel wird beim Detektor 14 der von der Sendeeinheit 12 ausgehende Nutzlichtanteil durch eine geeignete Filtereinrichtung 22 vom Anteil des Fremdlichts 20 getrennt. Um hierzu eine geeignete Filterung zu erreichen wird die Messung des Nutzlichts mit einer geeigneten Verzögerung nach dem Einschalten der Sendeeinheit 12 durchgeführt. Nach dem Stand der Technik wird diese Verzögerung in Abhängigkeit von dem verwendeten Filter 22, dessen Abstimmung und der Ansprechzeit des verwendeten Operationsverstärkers ermittelt. Diese Ermittlung kann beispielsweise in einer Auswerteeinheit 24 durchgeführt werden.

Erfindungsgemäß wird die Ermittlung der erforderlichen Messverzögerung nun dadurch durchgeführt, dass ein charakteristisches Merkmal eines vom Detektor 14 empfangenen Signals ausgenutzt wird, um die erforderliche, idealerweise optimale Messverzögerung zu ermitteln.

Üblicherweise weist die Sendeeinheit 12 einen oder mehrere LEDs auf, die stromgesteuert in unterschiedlicher Helligkeit betriebe, werden können. Die Empfindlichkeit des Detektors 14 muss an die jeweiligen Gegebenheiten, insbesondere an die Transmission der Scheibe 16 angepasst werden, so dass ein optimaler Arbeitspunkt eingestellt werden kann.

In Figur 2 ist schematisch die Einstellung der Messverzögerung nach dem Stand der Technik dargestellt. Die gesamte Messverzögerung 26 setzt sich dabei aus einer Kombination der Ansprechverzögerung TO1 des Operationsverstärkers und eine Messverzögerung durch die Filtereigenschaften TF zusammen. Das vom Detektor 14 gemessene Licht ist proportional zu einer Spannung U, die als Funktion der Zeit N(t) dargestellt ist. Zum Zeitpunkt T1 wird über ein Steuersignal S die Sendeeinheit 12 eingeschaltet. Nach der Anprechverzögerung TO1 eines verwendeten Operationsverstärkers, die typischerweise zwischen 200 ns und 12 $\mu$s liegt, beginnt das Messsignal N anzusteigen, bis es ein Maximum erreicht hat. Zum Zeitpunkt T2 wird das Steuersignal S wieder abgeschaltet und das Messsignal N(t) fällt steil ab. Der optimale Messzeitpunkt TN in Bezug auf das Messsignal N ist nun der, zudem das Messsignal N (t) ein Maximum P1 aufweist.

Die Messverzögerung 26 mit der nach dem Einschalten des Steuersignals S gemessen werden muss wird allerdings von verschiedenen Faktoren beeinflusst. Als ein wesentlicher Faktor sind dabei Toleranzen in den Bauteilen der Fremdlichtfilter zu nennen. Denn der im Detektor verwendete Fremdlichtfilter wird auf ganz bestimmte Grenzefrequenzen abgestimmt. Bei der Auslegung dieses Filters geht man von Nominalwerten der verwendeten Bauteile aus. Außerdem können variierende Ansprechzeiten des verwendeten Operationsverstärkers sowie gegebenenfalls die Eingangsimpedanz des Detektors den optimalen Messzeitpunkt beeinflussen. Diese Faktoren können zu einem so genannten Verschleifen des Messsignals bei der Adaption an dunkle Scheiben führen und eine Messung der Regenmenge verfälschen.

Verändert sich nun, wie in Figur 2 dargestellt, die Ansprechzeit des Operationsverstärkers zu TO2, so führt dies dazu, dass das Nutzersignal N(t) zwar zum Zeitpunkt TN, jedoch im Punkt P2 gemessen wird, der aber noch auf der ansteigenden Flanke des Nutztsignals N(t) liegt. Wird somit in Folge der beschriebenen Tolleranzen der verwendeten Bauteile oder auf Grund variierender Ansprechzeiten des verwendeten Operationsverstärkers die Messung zu früh durchgeführt, kann dies zu einem Verlust in der Empfindlichkeit des Regensensors führen. Daraus ist zu erkennen, dass es wichtig ist, den Messzeitpunkt bei jedem Regensensor individuell in Abhängigkeit von den eingesetzten Bauelementen und unter Berücksichtigung der unterschiedlichen Ansprechzeitverzögern des verwendeten Operationsverstärkers festzulegen.

Erfindungsgemäß wird die Messverzögerung nun nicht mehr anhand der bekannten Nominalwerte festgelegt, sondern anhand eines charakteristischen Merkmals des mit dem Detektor gemessenen Signals. Dabei eignet sich insbesondere der zeitliche Verlauf des Signals, wobei die optimale Messverzögerung dem Scheitelpunkt eines Nutzlichtsignals entspricht. Vorteilhafterweise wird dieser Zeitpunkt vor dem erstmaligen Benutzen des Regensensors ermittelt und die daraus resultierende Messverzögerung für den Regensensor abgespeichert und bei zukünftigen Messungen zugrunde gelegt.

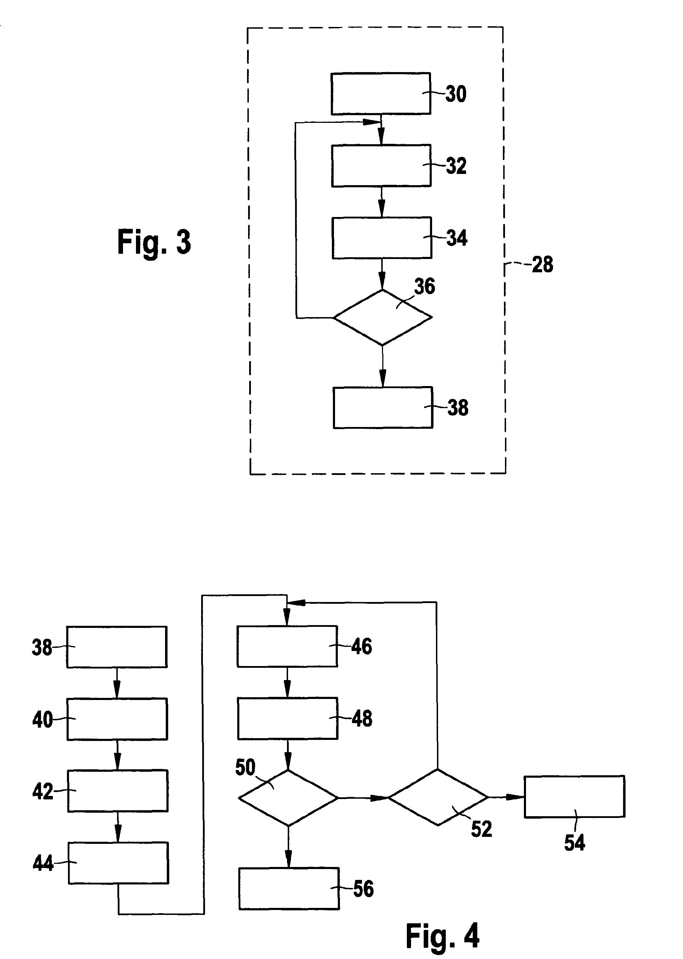

In Figur 3 ist schematisch der Ablauf des erfindungsgemäßen Verfahrens dargestellt. Nach dem Ankoppeln des Regensensors an die Windschutzscheibe kann eine Initialisierung 28 durch die Einstellung eines Arbeitspunktes und die erstmalige Einstellung einer Messverzögerung durchgeführt werden. Voraussetzung für eine erfolgreiche Durchführung der Initialisierung 28 ist, dass definierte Umgebungsbedingungen vorliegen. Insbesondere ist darauf zu achten, dass die Scheibe, an der der Regensensor 10 angekoppelt ist, trocken ist und während der Initialisierung nicht benetzt wird. Die Initialisierung kann in vorteilhafter Weise bereits am Ende der Herstellung des Kraftfahrzeugs im so genannten Bandendetest oder bei der Parametrisierung des Sensors im Kraftfahrzeug beim Kunden durchgeführt werden.

Zur Durchführung der Initialisierung wird im Schritt 30 zunächst eine für den Regensensor 10 geltende Standardmessverzögerung für die Nutzlichtmessung eingestellt. Anschließend wird die Sendeeinheit 12 mit einer Standardstromstärke bestromt und im Detektor 14 mit einer Standardempfindlichkeit im Schritt 36 geprüft, ob ein Nutzlichtwert vorliegt, der in einem festgelegten gültigen Bereich liegt. Ist dies nicht der Fall, so können im Stromvariations-Schritt 32 und im Empfindlichkeitsvariations-Schritt 34 der Strom der Sendeeinheit 12 und die Empfindlichkeit des Detektors 14 so lange variiert werden, bis eine Kombination von Strom und Empfindlichkeit gefunden ist, bei der sich ein Nutzlichtwert im gültigen Bereich ergibt. Damit ist die Initialisierung 28 abgeschlossen, ein Arbeitspunkt 38 und damit die Werte für die Bestromung der Sendeeinheit 12 und die Empfindlichkeit des Detektors 14 sind festgelegt.

Die weitere Vorgehensweise zum Festlegen der Messverzögerung ist in Fig. 4 schematisch dargestellt. Ausgehend von dem in der Initialisierung 28 festgelegtem Arbeitspunkt 38 wird nun im Schritt 40 die Messverzögerung zwischen der Aktivierung der Sendeeinheit 12 und der Aktivierung des Detektors 14 auf einen Wert eingestellt, der kleiner als der Standardwert der Messverzögerung ist. Der Betrag der prozentualen Reduzierung orientiert sich dabei an den theoretisch auftretenden Toleranzen der im Fremdlichtfilter 22 verwendeten Bauelemente sowie an der nominalen Ansprechzeit des verwendeten Operationsverstärkers, wobei zusätzlich eine geeignet große Toleranz berücksichtigt wird. Damit kann der Betrag der Reduzierung insbesondere in einem Bereich zwischen 30% und 70% des Standardwertes liegen und beispielsweise 50% des Standardwertes betragen. Mit dieser reduzierten Messverzögerung wird dann im Schritt 42 zur Ermittlung eines Nutzlichtwerts eine Nutzlichtmessung durchgeführt. Der Nutzlichtwert kann anschließend im Schritt 44 gespeichert oder zumindest in einem flüchtigen oder nichtflüchtigen Speicher zwischengespeichert werden. Anschließend werden weitere Messungen des Nutzlichtwertes durchgeführt, wobei bei jeder Messung die reduzierte Messverzögerung um einen geeigneten Betrag verlängert wird. Abhängig von den Bauteiltoleranzen und dem verwendeten Operationsverstärker steigen die Nutzlichtwerte bis zu einem Scheitelpunkt an. Die Lage des Scheitelpunkts kennzeichnet dann die für diesen Regensensor optimierte Messverzögerung.

Im Schritt 46 wird daher der Wert der reduzierten Messverzögerung um eine vorgegebene Zeit, beispielsweise um 1 μs erhöht und dann im Schritt 48 eine Nutzlichtmessung mit der neuen, verlängerten Messverzögerung durchgeführt. Im Vergleichsschritt 50 wird geprüft, ob der hierbei aktuell bestimmte Nutzlichtwert kleiner ist als der zuvor ermittelte Nutzlichtwert. Ist dies der Fall, so ist die optimierte Messverzögerung mit dem zuvor ermittelten Nutzlichtwert ermittelt. Die so ermittelte Messverzögerung kann im Schritt 56 beispielsweise in einem EEPROM abgespeichert und bei allen weitern Messungen mit dem Regensensor 10 berücksichtigt werden.

Wird im Vergleich 50 ermittelt, dass der aktuell ermittelte Nutzlichtwert nicht kleiner ist als der zuvor ermittelte Nutzlichtwert, so ist der Scheitelpunkt P1 noch nicht erreicht. Die Schleife kann demnach grundsätzlich unter erneuter Erhöhung der reduzierten Messverzögerung nochmals ausgeführt werden. Davor kann allerdings hier ein Hardware-Prüfungsschritt 52 vorgesehen werden, mit dem festgestellt wird, ob ein Hardwarefehler vorliegt. Dabei ist ein Fehler insbesondere dann anzunehmen, wenn die iterativ erhöhte reduzierte Messverzögerung einen festgelegten Maximalwert überschritten hat, der deutlich größer ist, als die für diesen Sensor festgelegte Standardmessverzögerung. Dieser Maximalwert kann beispielsweise auf einem Wert von mehr als 130% der Standardmessverzögerung, insbesondere auf 150% der Standardmessverzögerung festgelegt werden. Denn beim Erreichen des festgelegten Maximalwertes entspricht die Signalform am Ausgang des Operationsverstärkers nicht den Vorgaben, so dass ein Hardware-Fehler vorliegt. In diesem Fall wird die Ermittlung der optimalen Messverzögerung abgebrochen und im Schritt 54 ein Fehler gemeldet oder in einem Fehlerprotokoll abgespeichert. Wird im Schritt 52 kein Hardware-Fehler erkannt, so wird das Verfahren wie bereits beschrieben iterativ fortgesetzt, bis die optimale Messverzögerung gefunden ist.

Die Ermittlung der Messverzögerung 26 wurde zwar anhand eines iterativen Verfahrens beschrieben, jedoch sind auch andere Verfahren zur Auswertung der Messkurve N(t), insbesondere Verfahren zur Ermittlung eines Scheitelpunktes verwendbar. Beispielsweise kann durch Bildung der Ableitung der Funktion N(t) nach der Zeit ein Scheitelpunkt dadurch gefunden werden kann, dass die Ableitung gleich Null gesetzt wird, so dass sich der Scheitel mit der Bedingung $\frac{dN(t)}{dt} = 0$ ergibt.

Bei der Ermittlung der Messverzögerung 26 kann weiterhin auch die jeweils anliegende Eingangsimpedanz des Detektors 14 berücksichtigt werden. Die Eingangsimpedanz ist indirekt abhängig von der Scheibentransmission, so dass damit letztendlich auch die Scheibentransmission berücksichtigt werden kann.

Mit dem beschrieben Verfahren kann die erforderliche beziehungsweise die optimale Messverzögerung 26 durch den Sensor selbst ermittelt werden. Dies kann bereits im Verlauf des Bandendetests im Werk durchgeführt werden. Dabei kann der Vorgang beispielsweise über die Busschnittstelle durch das Programm im jeweiligen Prüfturm angetriggert werden.

Sofern die Ermittlung der Messzeitverzögerung im Laufe der Lebensdauer eines Senders wiederholt, beispielsweise zyklisch wiederholt wird, können damit Alterungseffekte etwa an den Bauteilen des Regensensors 10 oder der Umgebung, wie der Windschutzscheibe, ausgeglichen werden. Hierzu ist es erforderlich, wiederum die geforderte definierte Umgebungsbedingungen zu schaffen. Daher wird die Wiederholung bevorzugt während eines Referenzwischzyklusses durchgeführt.

Mit dem erfindungsgemäßen Verfahren und dem erfindungsgemäßen Regensensor 1 können somit auch geänderte Ansprechzeiten des Operationsverstärkers ausgeglichen werden, die beispielsweise durch Alterung oder Austausch herbeigeführt werden. Außerdem können preiswerte Operationsverstärker eingesetzt werden, die eine längere Ansprechzeit haben. In keinem dieser Fälle ist eine Anpassung der Sensorsoftware selbst erforderlich.

Vorteilhaft ist weiterhin, dass mit dem Verfahren auch die stets vorhandenen Schwankungen der Ansprechzeit der Operationsverstärker innerhalb einer Herstellungscharge kompensiert werden können. Dies gilt auch für Toleranzschwankungen und Drifterscheinungen sowie Verletzungen der Spezifikation, die schon bei der Bandendkontrolle im Werk erkannt werden. Fehlerhafte Regensensoren können so leicht und zu einem frühen Zeitpunkt aussortiert werden.

## Patentansprüche

1.  Verfahren zum Betreiben eines Regensensors (10) insbesondere für Kraftfahrzeuge mit einer Sendeeinheit (12) zum Aussenden von Nutzlicht und einem Detektor (14), der Nutzlicht der Sendeeinheit (12) und nicht von der Sendeeinheit (12) stammendes Fremdlicht (18) empfangen kann, wobei das Nutzlicht (18) mit einer festgelegten Messverzögerung (26) nach dem Einschalten des Sendelichts gemessen wird, **dadurch gekennzeichnet, dass** ein charakteristisches Merkmal des vom Detektor (14) empfangenen Empfangssignals (N) ausgenutzt wird, um die Messverzögerung (26) zu ermitteln.

2.  Verfahren nach Anspruch 1 **dadurch gekennzeichnet, dass** ein vom Detektor (14) als Funktion der Zeit empfangenes Signal (N) genutzt wird, um die Messverzögerung (26) zu ermitteln.

3.  Verfahren nach Anspruch 2 **dadurch gekennzeichnet, dass** das vom Detektor (14) empfangene Signal (N) einen Scheitelpunkt (P1) aufweist und die Messverzögerung (26) der Zeit vom Einschalten des Sendelichts bis der Zeit, an dem die Funktion (N) ihren Scheitelpunkt (P1) aufweist entspricht.

4.  Verfahren nach Anspruch 2 oder 3 **dadurch gekennzeichnet, dass** das als Funktion der Zeit empfangene Signal (N) das Nutzlichtsignal ist.

5.  Verfahren nach Anspruch 3 oder 4 **dadurch gekennzeichnet, dass** die Messverzögerung (26) iterativ durch eine schrittweise Anhebung einer reduzierten Messzeitverzögerung ermittelt wird wobei der Wert des Nutzlichts am Detektor (14) überwacht wird.

6.  Verfahren nach Anspruch 5 **dadurch gekennzeichnet, dass** aus den überwachten Nutzlichtwerten ein Maximum ermittelt wird und daraus die Messverzögerung (26) bestimmt wird.

7. Verfahren nach einem der Ansprüche 1 bis 6 **dadurch gekennzeichnet, dass** die Messverzögerung (26) durch die jeweils vorhandene Eingangsimpedanz des Detektors (14) modifiziert wird.

8. Verfahren nach einem der Ansprüche 1 bis 7 **dadurch gekennzeichnet, dass** der Regensensor (10) die Messverzögerung (26) automatisch bestimmt.

9. Verfahren nach einem der Ansprüche 1 bis 8 **dadurch gekennzeichnet, dass** die Messverzögerung (26) in einem Speicher, insbesondere einem Speicher des Regensensors (10), abgespeichert und für künftige Regenmessungen berücksichtigt wird.

10. Verfahren nach einem der Ansprüche 1 bis 9 **dadurch gekennzeichnet, dass** die Messverzögerung (26) im Laufe der Lebensdauer des Regensensors (10) insbesondere zu fest vorgegebenen Zeitabständen oder zyklisch wiederholt wird.

11. Verfahren nach einem der Ansprüche 1 bis 10 **dadurch gekennzeichnet, dass** die Messverzögerung (26) im Laufe der Lebensdauer des Regensensors (10) durch einen Benutzer des Fahrzeugs initiiert wiederholt wird.

12. Regensensor (10) insbesondere für Kraftfahrzeuge zur Durchführung des Verfahrens gemäß Anspruch 1 mit einer Sendeeinheit (12) zum Aussenden von Nutzlicht und einem Detektor (14), der Nutzlicht der Sendeeinheit (12) und nicht von der Sendeeinheit (12) stammendes Fremdlicht (20) empfangen kann, und einer Auswerteeinheit (24) mit der das Nutzlicht (18) mit einer festgelegten Messverzögerung (26) nach dem Einschalten des Sendelichts auswertbar ist, **dadurch gekennzeichnet, dass** in der Auswerteeinheit (24) die Messverzögerung (26) durch die Auswertung eines charakteristisches Merkmals des vom Detektor (14) empfangenen Empfangssignals (N) ermittelt wird.

13. Regensensor (10) nach Anspruch 11 **dadurch gekennzeichnet, dass** im Regensensor eine Speichereinrichtung zum Speichern der festgelegten Messverzögerung (26) vorgesehen ist.

14. Regensensor (10) nach Anspruch 11 oder **dadurch gekennzeichnet, dass** vor dem Detektor (14) eine Filtereinrichtung (22) zum Filtern von Fremdlicht (20) vorgesehen ist.

**Claims**

1. Method for operating a rain sensor (10), particularly for motor vehicles, having a transmitting unit (12) for emitting useful light and a detector (14) which can receive useful light from the transmitting unit (12) and extraneous light (20) which does not come from the transmitting unit (12), the useful light (18) being measured with a defined measuring delay (26) after the transmission light has been switched on, **characterized in that** a characteristic feature of the reception signal (N) received by the detector (14) is used to determine the measuring delay (26).

2. Method according to Claim 1, **characterized in that** a signal (N) received by the detector (14) as a function of time is used to determine the measuring delay (26).

3. Method according to Claim 2, **characterized in that** the signal (N) received by the detector (14) has a peak (P1), and the measuring delay (26) corresponds to the time at which the transmission light is switched on to the time at which the function (N) has its peak (P1).

4. Method according to Claim 2 or 3, **characterized in that** the signal (N) received as a function of time is the useful light signal.

5. Method according to Claim 3 or 4, **characterized in that** the measuring delay (26) is iteratively determined by gradually increasing a reduced measuring time delay, the value of the useful light being monitored at the detector (14).

6. Method according to Claim 5, **characterized in that** a maximum is determined from the useful light values monitored and the measuring delay (26) is determined from said maximum.

7. Method according to one of Claims 1 to 6, **characterized in that** the measuring delay (26) is modified by the respectively present input impedance of the detector (14).

8. Method according to one of Claims 1 to 7, **characterized in that** the rain sensor (10) automatically determines the measuring delay (26).

9. Method according to one of Claims 1 to 8, **characterized in that** the measuring delay (26) is stored in a memory, in particular a memory of the rain sensor (10), and is taken into account for future rain measurements.

10. Method according to one of Claims 1 to 9, **characterized in that** the measuring delay (26) is repeated over the course of the service life of the rain sensor (10), in particular at firmly predefined intervals of time or cyclically.

11. Method according to one of Claims 1 to 10, **characterized in that** the measuring delay (26) is repeated over the course of the service life of the rain sensor (10) in a manner initiated by a user of the vehicle.

12. Rain sensor (10), particularly for motor vehicles, for carrying out the method according to Claim 1, having a transmitting unit (12) for emitting useful light and a detector (14) which can receive useful light from the transmitting unit (12) and extraneous light (20) which does not come from the transmitting unit (12), and an evaluation unit (24) which can be used to evaluate the useful light (18) with a defined measuring delay (26) after the transmission light has been switched on, **characterized in that** the measuring delay (26) is determined in the evaluation unit (24) by evaluating a characteristic feature of the reception signal (N) received by the detector (14).

13. Rain sensor (10) according to Claim 12, **characterized in that** a memory device for storing the determined measuring delay (26) is provided in the rain sensor.

14. Rain sensor (10) according to Claim 12 or 13, **characterized in that** a filter device (22) for filtering extraneous light (20) is provided upstream of the detector (14).

## Revendications

1. Procédé pour faire fonctionner un détecteur de pluie (10), notamment pour véhicules automobiles, avec une unité émettrice (12) permettant d'envoyer de la lumière utile et un détecteur (14) pouvant réceptionner la lumière utile de l'unité émettrice (12) et la lumière extérieure (20) ne provenant pas de l'unité émettrice (12), la lumière utile (18) étant mesurée avec un certain décalage de mesure (26) constaté après déclenchement de la lumière émise, **caractérisé en ce qu'**une caractéristique du signal de réception (N) reçu par le détecteur (14) est utilisée pour calculer le décalage de mesure (26).

2. Procédé selon la revendication 1, **caractérisé en ce qu'**un signal (N) reçu par le détecteur (14) comme fonction du temps est utilisé pour calculer le décalage de mesure (26).

3. Procédé selon la revendication 2, **caractérisé en ce que** le signal (N) reçu par le détecteur (14) présente un point culminant (P1) et **en ce que** le décalage de mesure (26) correspond au temps écoulé entre le déclenchement de la lumière émise et le moment où la fonction (N) atteint son point culminant (P1).

4. Procédé selon la revendication 2 ou 3, **caractérisé en ce que** le signal (N) reçu comme fonction du temps est le signal de lumière utile.

5. Procédé selon la revendication 3 ou 4, **caractérisé en ce que** le décalage de mesure (26) est calculé par itération en augmentant par paliers un décalage du temps de mesure réduit, la valeur de la lumière utile étant surveillée au niveau du détecteur (14).

6. Procédé selon la revendication 5, **caractérisé en ce qu'**un maximum est calculé à partir des valeurs de lumière utile surveillées et **en ce que** le décalage de mesure (26) est déterminé à partir de ces valeurs.

7. Procédé selon l'une quelconque des revendications 1 à 6, **caractérisé en ce que** le décalage de mesure (26) est modifié par l'impédance d'entrée du détecteur (14) respectivement présente.

8. Procédé selon l'une quelconque des revendications 1 à 7, **caractérisé en ce que** le détecteur de pluie (10) définit automatiquement le décalage de mesure (26).

9. Procédé selon l'une quelconque des revendications 1 à 8, **caractérisé en ce que** le décalage de mesure (26) est mémorisé dans une mémoire, notamment dans une mémoire du détecteur de pluie (10) et prise en compte pour les mesures de pluie ultérieures.

10. Procédé selon l'une quelconque des revendications 1 à 9, **caractérisé en ce que** le décalage de mesure (26) est répété pendant toute la durée de vie du détecteur de pluie (10), notamment de façon cyclique ou à intervalles prédéfinis.

11. Procédé selon l'une quelconque des revendications 1 à 10, **caractérisé en ce que** le décalage de mesure (26) est répété pendant toute la durée de vie du détecteur de pluie (10) et est initié par un utilisateur du véhicule.

12. Détecteur de pluie (10), notamment pour véhicules automobiles, destiné à mettre en oeuvre le procédé selon la revendication 1, avec une unité émettrice (12) permettant d'envoyer de la lumière utile et un détecteur (14) pouvant recevoir la lumière utile de l'unité émettrice (12) et la lumière extérieure (20) ne provenant pas de l'unité émettrice (12), et une unité d'analyse (24) permettant d'analyser la lumière utile (18) avec un décalage de mesure (26) défini après déclenchement de la lumière émise, **caractérisé en ce que** le décalage de mesure (26) est calculé dans l'unité d'analyse (24) par analyse d'une caractéristique du signal de réception (N) reçu par le détecteur (14).

**13.** Détecteur de pluie (10) selon la revendication 12, **caractérisé en ce qu'**un dispositif de mémoire est prévu dans le détecteur de pluie pour mémoriser le décalage de mesure (26) constaté.

**14.** Détecteur de pluie (10) selon la revendication 12 ou 13, **caractérisé en ce qu'**un dispositif de filtrage (22) est prévu avant le détecteur (14) pour filtrer la lumière extérieure (20).

**Fig. 1**

20

16

18

22

10

12

14

24

**Fig. 2**

U

26

P1

N

P2

N

S

T1  TS  TN  T2  t

TO1

TO2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4217390 C2
- US 6108084 A